# EUROPÄISCHE PATENTSCHRIFT

(11) **EP 1 658 188 B1**
(45) Veröffentlichungstag und Bekanntmachung des Hinweises auf die Patenterteilung: **17.09.2008**
(21) Anmeldenummer: 04763659.2
(22) Anmeldetag: 30.07.2004
(51) Int. Cl.: B60J 7/20, B62D 25/12

(54) **HECKDECKEL FÜR EIN CABRIOLET-FAHRZEUG**
BOOTLID FOR A CABRIOLET VEHICLE
COUVERCLE DE COFFRE POUR UN VEHICULE CABRIOLET

(30) Priorität: 28.08.2003 DE 10340017
(43) Veröffentlichungstag der Anmeldung: 24.05.2006
(73) Patentinhaber: CTS Fahrzeug-Dachsysteme GmbH, 74321 Bietigheim-Bissingen (DE)
(72) Erfinder: WAGNER, Tobias, 21149 Hamburg (DE)
(74) Vertreter: Müller, Gottfried
(86) Internationale Anmeldenummer: PCT/EP2004/008579
(87) Internationale Veröffentlichungsnummer: WO 2005/028230

(56) Entgegenhaltungen:
- DE-A- 10 160 406
- DE-A- 19 932 500
- DE-A- 19 946 454
- FR-A- 2 835 477
- US-A- 5 823 606

## Beschreibung

Die Erfindung bezieht sich auf einen Heckdeckel für ein Cabriolet-Fahrzeug nach dem Oberbegriff des Anspruches 1.

Ein derartiger Heckdeckel wird in der Druckschrift DE 199 46 454 A1 beschrieben. Der Heckdeckel ist über eine Siebengelenkkinematik mit der Fahrzeugkarosserie verbunden und kann zum Beladen des Kofferraumes mit seiner dem Fahrzeugheck benachbarten Hinterkante und zum Ablegen des klappbaren Fahrzeugdeckels mit seiner dem Fahrzeuginnenraum benachbarten Vorderkante angehoben werden, wodurch ein Verdeckkasten zur Aufnahme des Fahrzeugverdecks zugänglich gemacht wird. Über ein heckseitiges Verriegelungselement wird der Heckdeckel in geschlossener Position arretiert. Im Bereich der Heckseite kann der Heckdeckel zur Anhebung der Vorderkante um eine Schwenkachse aufgestellt werden. Diese Aufstellbewegung wird mithilfe eines elektrischen Antriebsmotors durchgeführt, der einen Lenker der Siebengelenkkinematik des Heckdeckels beaufschlagt. Hierfür wird in einer ersten Bewegungsphase des Heckdeckels zunächst ein Verriegelungshaken im Bereich der Vorderkante des Heckdeckels mithilfe eines Seilzugsystems gelöst, damit die Vorderkante angehoben werden kann. In einer darauf folgenden Bewegungsphase wird der Heckdeckel über die Siebengelenkkinematik um seine heckseitige Schwenkachse aufgeschwenkt und die Vorderkante angehoben.

Zum Be- und Entladen des Kofferraumes verbleibt dagegen der benachbart zur Vorderkante des Heckdeckels angeordnete Haken in seiner Verriegelungsstellung, in welcher der Haken eine Gelenkwelle der Siebengelenkkinematik umgreift. Hierdurch wird ein Anheben der Vorderkante des Heckdeckels verhindert; zugleich wird das Verriegelungselement im Heckbereich gelöst und wird die Hinterkante des Heckdeckels manuell angehoben. Diese Ausschwenkbewegung zum Be- und Entladen des Kofferraumes kann mithilfe eines passiven Federelementes, beispielsweise einer Gasdruckfeder unterstützt werden.

Das wahlweise Anheben des Heckdeckels um seine Vorderkante bzw. um seine Hinterkante ist jedoch nicht vollautomatisch durchführbar. Über den dem Heckdeckel zugeordneten Antriebsmotor wird nur die Anhebung der Vorderkante zum Ablegen des Fahrzeugverdecks unterstützt.

Ein Heckdeckel für ein Cabriolet-Fahrzeug wird auch in der Druckschrift FR 28 35 477 A1 beschrieben. Der Heckdeckel ist wahlweise entweder im Bereich seiner Vorderkante oder im Bereich seiner Hinterkante anzuheben, um einen Verdeckkasten zur Aufnahme des Fahrzeugdaches in dessen Ablagestellung oder den Kofferraum des Fahrzeuges freizugeben. Im Bereich der Vorderkante und der Hinterkante ist jeweils eine Mehrgelenkkinematik angeordnet, die zum Anheben der betreffenden Kante aus ihrer Funktionsstellung in eine Entriegelungsstellung zu versetzen ist. Die Mehrgelenkkinematiken im Bereich der Vorderkante und der Hinterkante des Heckdeckels sind unabhängig voneinander ausgebildet und müssen deshalb auch unabhängig voneinander durch entsprechende Betätigungsmechanismen aus der Funktionsstellung in die Entriegelungsstellung überführt werden. Erst nachdem eine der beiden Kinematiken gelöst und die entsprechende Kante freigegeben ist, wird der Heckdeckel mithilfe eines Stellelementes aus seiner geschlossenen Position in eine angehobene Position verstellt. Sowohl das Anheben der Vorderkante als auch das Anheben der Hinterkante erfolgt mit dem gleichen Stellelement.

Nachteilig an dieser Ausführung ist, dass die Ausführung mit zwei unabhängigen Kinematiken im Bereich der Vorderkante und der Hinterkante des Heckdeckels einen erheblichen konstruktiven Aufwand sowie einen erhöhten Stellaufwand erfordert, da jede der beiden Kinematiken zwischen einer Verriegelungs- bzw. Funktionsposition und einer Entriegelungsposition verstellbar ausgebildet sein muss.

Die gattungsgemäße Druckschrift DE 199 32 500 A1 betrifft ebenfalls einen Heckdeckel für ein Cabriolet-Fahrzeug. Der Heckdeckel ist über eine vordere Viergelenkkinematik und eine hintere Viergelenkkinematik verstellbar an die Fahrzeugkarosserie gekoppelt, wobei im Falle einer Betätigung der vorderen Viergelenkkinematik die Hinterkante des Heckdeckels und im Falle einer Betätigung der hinteren Viergelenkkinematik die Vorderkante des Heckdeckels anzuheben ist. Die beiden Viergelenkkinematiken teilen sich einen gemeinsamen Hebel, der von einem Aktuator beaufschlagt wird.

Um die beiden Aufstellbewegungen des Heckdeckels durchzuführen, muss wahlweise ein vorderes Drehgelenk bzw. ein hinteres Drehgelenk entriegelt und wieder verriegelt werden. So ist es zur Anhebung der Vorderkante des Heckdeckels notwendig, ein erstes Gelenk, welches zwischen einem ersten Hebel und einem zweiten Hebel angeordnet ist, aus einer karosseriefesten Position zu lösen, woraufhin bei Betätigung der hinteren Viergelenkkinematik die Vorderkante des Heckdeckels angehoben werden kann. Zum Öffnen des Kofferraumes wird dagegen dieses Drehgelenk in seiner karosseriefesten Position verriegelt und ein heckseitiges Drehgelenk geöffnet, wodurch bei Betätigung der vorderen Viergelenkkinematik die Hinterkante des Heckdeckels angehoben wird.

Diese Ausführung weist den Nachteil auf, dass an jeder Heckdeckelseite jeweils zwei Viergelenkkinematiken erforderlich sind, um die gewünschten Öffnungsbewegungen des Heckdeckels durchführen zu können. Die beiden Viergelenkkinematiken erstrecken sich über den gesamten Seitenbereich des Heckdeckels zwischen Vorderkante und Hinterkante, wofür Bauraum vorgehalten werden muss, der den frei nutzbaren Bereich einschränkt.

Der Erfindung liegt das Problem zugrunde, mit einfachen Maßnahmen einen Heckdeckel für ein Cabriolet-Fahrzeug zu schaffen, der wahlweise automatisch entweder mit seiner Vorderkante oder mit seiner Hinterkante angehoben werden kann.

Dieses Problem wird erfindungsgemäß mit den Merkmalen des Anspruches 1 gelöst. Die Unteransprüche geben zweckmäßige Weiterbildungen an.

Der erfindungsgemäße Heckdeckel ist über eine Mehrgelenkkinematik an die Fahrzeugkarosserie gekoppelt, wobei die Mehrgelenkkinematik einen Verriegelungslenker umfasst, der zwischen einer Verriegelungsstellung und Entriegelungsstellung verstellt werden kann und in Verriegelungsstellung an der Fahrzeugkarosserie gehalten ist, jedoch über ein Drehgelenk gegenüber der Fahrzeugkarosserie verschwenkt werden kann. Der Verriegelungslenker wird zum Be- und Entladen des Kofferraumes in seine Verriegelungsstellung überführt, zugleich wird die heckseitige Verriegelung gelöst, so dass die Hinterkante des Heckdeckels angehoben werden kann. Zur Ablage des Fahrzeugdaches wird dagegen der Verriegelungslenker in die Entriegelungsstellung verstellt, in welcher das betreffende, an die Karosserie koppelbare Drehgelenk entriegelt ist, so dass die Bindung des Verriegelungslenkers über dieses Drehgelenk an die Fahrzeugkarosserie aufgehoben ist. In Entriegelungsstellung des Verriegelungslenkers kann somit der Heckdeckel um sein heckseitiges Drehgelenk aufgeschwenkt werden, wodurch die Vorderkante des Heckdeckels angehoben wird.

Beide Öffnungsbewegungen des Heckdeckels, also sowohl das Anheben der Hinterkante als auch das Anheben der Vorderkante, können mit derselben Mehrgelenkkinematik durchgeführt werden, die von nur einem Antriebselement zu betätigen ist. Hierdurch wird gegenüber Ausführungen aus dem Stand der Technik ein signifikanter Vorteil erzielt, da zusätzliche Antriebselemente bzw. zusätzliche Kinematiken entfallen können.

Der Antrieb der Mehrgelenkkinematik erfolgt vorteilhaft über einen Antriebslenker, welcher Bestandteil der Mehrgelenkkinematik ist, und welcher gelenkig an der Fahrzeugkarosserie gelagert ist. An diesem Antriebslenker greift zweckmäßig das Antriebselement an, welches insbesondere als hydraulisches Stellglied ausgebildet ist. Die Stellrichtung zur Anhebung des Heckdeckels ist bevorzugt für beide Öffnungsbewegungen gleich, wofür sich insbesondere die Verwendung eines linearen, translatorisch verstellbaren Antriebselementes anbietet. Die Unterscheidung, ob die Vorderkante oder die Hinterkante des Heckdeckels angehoben werden soll, kann über die Verriegelung des Verriegelungslenkers bzw. des heckseitigen Drehgelenks gesteuert werden.

In bevorzugter Ausführung bildet die Mehrgelenkkinematik eine Siebengelenkkinematik, der vorteilhaft insgesamt vier Lenker zugeordnet sind, von denen ein Lenker den Verriegelungslenker bildet, welcher an der Fahrzeugkarosserie verriegelt werden kann bzw. von dieser entriegelbar ist. Als weitere Lenker sind der Siebengelenkkinematik der an der Fahrzeugkarosserie gelenkig gelagerte Antriebslenker sowie zwei Hublenker zugeordnet, die jeweils einenends gelenkig am Heckdeckel gelagert sind und von denen ein erster Hublenker anderenends gelenkig mit dem Antriebslenker und der zweite Hublenker gelenkig mit dem Verriegelungslenker gekoppelt ist. Um überzählige Freiheitsgrade der Siebengelenkkinematik zu binden, ist der Verriegelungslenker über ein zusätzliches, mittleres Drehgelenk mit dem ersten Hublenker verbunden. Auf diese Weise besitzt die Siebengelenkkinematik in Verriegelungsstellung des Verriegelungslenkers genau einen Freiheitsgrad, wodurch bei Betätigung des Antriebselementes zur Anhebung der Hinterkante des Heckdeckels das gesamte Heckdeckelsystem eine genau definierte Öffnungsbewegung durchführt. In Entriegelungsstellung des Verriegelungslenkers wird der zusätzliche Freiheitsgrad der Siebengelenkkinematik über die Kopplung des Heckdeckels an dem heckseitigen Drehgelenk gebunden, so dass bei Betätigung des Antriebselementes ebenfalls eine kinematisch eindeutige Öffnungsbewegung durchführbar ist.

Die Ver- und Entriegelung des Verriegelungslenkers erfolgt vorteilhaft mithilfe einer automatisch betätigbaren Lenkerverriegelungseinheit, die je nach gewünschter Öffnungsbewegung des Heckdeckels ansteuerbar ist.

Der Heckdeckel kann einteilig, rahmenfrei ausgeführt sein, da die Art der Öffnungsbewegung des Heckdeckels über die Ver- und Entriegelung des Verriegelungslenkers bzw. des heckseitigen Drehgelenks gesteuert wird, wodurch die Notwendigkeit einer zweiteiligen Ausführung des Heckdeckels mit zueinander relativbeweglichen Heckdeckelabschnitten für die unterschiedlichen Öffnungsbewegungen entfällt.

Weitere Vorteile und zweckmäßige Ausführungen sind den weiteren Ansprüchen, der Figurenbeschreibung und den Zeichnungen zu entnehmen. Es zeigen:
- Fig. 1: eine Seitenansicht auf ein als zweiteiliges Hardtop ausgeführtes, versenkbares Fahrzeugdach, dargestellt in Schließposition, mit einem über eine Siebengelenkkinematik aufstellbaren Heckdeckel in geschlossenem Zustand,
- Fig. 2: die Siebengelenkkinematik des Heckdeckels in vergrößerter Darstellung, wobei ein Verriegelungslenker der Siebengelenkkinematik über eine automatisch betätigbare Lenkerverriegelungseinheit schwenkbar an die Fahrzeugkarosserie gekoppelt ist,
- Fig. 3: der Heckdeckel mit aufgeschwenkter Hinterkante zum Be- und Entladen des Kofferraumes,
- Fig. 4: eine vergrößerte Darstellung der Siebengelenkkinematik bei angehobener Hinterkante des Heckdeckels,
- Fig. 5: der Heckdeckel mit angehobener Vorderkante zur Überführung des Fahrzeugdaches in einen heckseitigen Verdeckkasten, in einer Darstellung des Hardtops in einer Zwischenposition zwischen Schließ- und Ablagestellung,
- Fig. 6: das Hardtop in Ablageposition im heckseitigen Verdeckkasten mit geschlossenem Heckdeckel,
- Fig. 7: eine vergrößerte Darstellung des Heckdeckels einschließlich Siebengelenkkinematik bei angehobener Vorderkante des Heckdeckels.

In den Figuren sind gleiche Bauteile mit gleichen Bezugszeichen versehen.

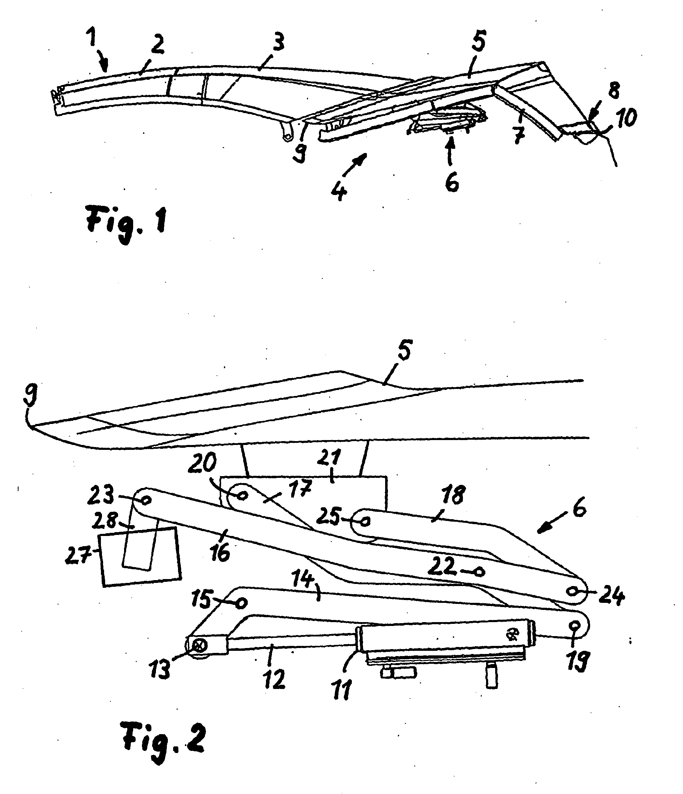

Bei dem in Fig. 1 dargestellten Fahrzeugdach 1 handelt es sich um ein Hardtop mit zwei in Schließrichtung hintereinander angeordneten, starren Dachteilen 2 und 3, die zwischen der gezeigten Schließstellung und einer Ablageposition zu verstellen sind, in welcher das Fahrzeugdach 1 in einem heckseitigen Ablageraum bzw. Verdeckkasten abgelegt ist, welcher Teil des Kofferraumes 4 sein kann bzw. unmittelbar benachbart zum Kofferraum liegt. Im Rahmen der Erfindung kann anstelle eines Hardtops auch ein versenkbares Softtop mit einem auf einem Verdeckgestänge aufgespannten Bezugstoff eingesetzt werden.

Der Kofferraum 4 des Fahrzeuges ist von einem Heckdeckel 5 zu verschließen, welcher über eine Mehrgelenkkinematik 6 verstellbar an die Fahrzeugkarosserie 7 gekoppelt ist. Die Mehrgelenkkinematik 6 ist von einem Antriebselement zu beaufschlagen, wodurch der Heckdeckel zwischen der gezeigten Schließstellung und einer angehobenen Position zu verstellen ist. Der Heckdeckel 5 weist im heckseitigen Bereich ein Heckverriegelungsteil 8 auf, über das der Heckdeckel in geschlossener Position mit der Fahrzeugkarosserie zu verriegeln ist. In das Heckverriegelungsteil 8 ist ein Drehgelenk integriert, über das der Heckdeckel 5 zum Anheben seiner Vorderkante 9 bei Betätigung der Mehrgelenkkinematik 6 aufschwenkbar ist; die Vorderkante 9 des Heckdeckels wird zum Ablegen des Fahrzeugdaches 1 in den Verdeckkasten bzw. zum Herausheben aus dem Verdeckkasten angehoben. Zum Be- und Entladen des Kofferraumes 4 wird das Heckverriegelungsteil 8 entriegelt und die Hinterkante 10 des Heckdeckels angehoben. Diese Öffnungsbewegung des Heckdeckels 5 kann ebenfalls durch Betätigung der Mehrgelenkkinematik 6 erzeugt werden.

In Fig. 2 ist die Mehrgelenkkinematik 6 vergrößert dargestellt. Die Mehrgelenkkinematik ist als Siebengelenkkinematik ausgebildet und umfasst insgesamt vier Lenker, nämlich einen Antriebslenker 14, einen Verriegelungslenker 16, einen ersten Hublenker 17 sowie einen zweiten Hublenker 18. Die Mehrgelenkkinematik wird von dem Antriebselement 11 angetrieben, welches an der Fahrzeugkarosserie abgestützt und als hydraulisches Stellglied ausgeführt ist, dessen translatorisch verfahrbarer Hubkolben 12 über ein Drehgelenk 13 gelenkig mit dem Antriebslenker 14 der Mehrgelenkkinematik 6 gekoppelt ist. Der Antriebslenker 14 ist über ein karosserieseitiges Drehgelenk 15 schwenkbar mit der Fahrzeugkarosserie verbunden, wobei das Drehgelenk 15 auf Abstand zum Drehgelenk 13 zwischen dem Antriebselement 11 und dem Antriebslenker 14 liegt, so dass bei einer Betätigung des Antriebselementes der Antriebslenker mit einem antreibenden Drehmoment um die Drehachse seines karosserieseitigen Drehgelenkes 15 beaufschlagt wird.

Auf seiner dem Drehgelenk 13 zum Antriebselement 11 abgewandten Seite ist der Antriebslenker 14 über ein weiteres Drehgelenk 19 schwenkbar mit dem ersten Hublenker 17 gekoppelt, der anderenends über ein Drehgelenk 20 schwenkbar mit einer Konsole 21 verbunden ist, die fest mit dem Heckdeckel 5 verbunden ist bzw. einen Bestandteil des Heckdeckels bildet. In einem mittleren Abschnitt des ersten Hublenkers 17 befindet sich ein weiteres Drehgelenk 22, über das der erste Hublenker 17 gelenkig mit dem Verriegelungslenker 16 der Mehrgelenkkinematik gekoppelt ist. Der Verriegelungslenker 16 weist an seinen stirnseitigen Enden Drehgelenke 23 und 24 auf, wobei über das Drehgelenk 23 eine schwenkbare Anbindung an die Fahrzeugkarosserie realisiert wird und über das gegenüberliegende Drehgelenk 24 der Verriegelungslenker 16 schwenkbar mit dem zweiten Hublenker 18 gekoppelt ist. Der zweite Hublenker 18 ist anderenends über ein Drehgelenk 25 gelenkig mit der Konsole 21 verbunden. Die Drehgelenke 15, 19, 20, 22, 23, 24 und 25 bilden die insgesamt sieben Drehgelenke der Mehrgelenkkinematik 6.

Der Verriegelungslenker 16 ist auf seiner dem zweiten Hublenker 18 abgewandten Seite über einen stirnseitigen Flansch 28 fest mit einer Lenkerverriegelungseinheit 27 verbunden, die auf der Fahrzeugkarosserie sitzt. Der Flansch 28 ist über das Drehgelenk 23 gelenkig an den Verriegelungslenker 16 gekoppelt. In verriegeltem Zustand ist der Flansch 28 in der Lenkerverriegelungseinheit 27 aufgenommen, wodurch das Drehgelenk 23 fest mit der Fahrzeugkarosserie gekoppelt wird und der Verriegelungslenker 16 um die Achse des Drehgelenks 23 verschwenkbar ist. Der Flansch 28 kann durch Entriegeln aus der Lenkerverriegelungseinheit 27 gelöst werden, wodurch das Drehgelenk 23 außer Funktion gelangt und die Bindung des Verriegelungslenkers 16 an die Fahrzeugkarosserie im Bereich des Drehgelenks 23 bzw. des Flansches 28 aufgehoben wird. Die Verriegelungsstellung ist dem Anheben der Hinterkante des Heckdeckels für das Be- und Entladen des Kofferraumes zugeordnet, die Entriegelungsstellung dagegen dem Anheben der Vorderkante des Heckdeckels zur Ablage des Fahrzeugverdecks bzw. dem Herausheben des Fahrzeugverdeckes aus dem Ablagekasten. Die Ver- und Entriegelung des Verriegelungslenkers 16 von der Lenkerverriegelungseinheit 27 erfolgt zweckmäßig automatisch über ein zugeordnetes Stellelement.

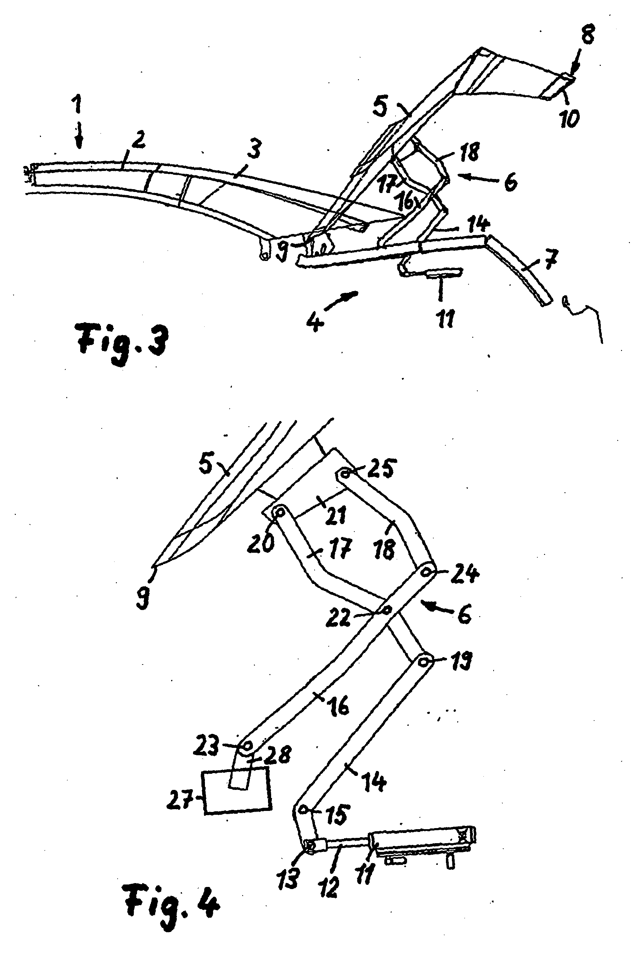

In Fig. 3 ist der Heckdeckel 5 bei geschlossenem Fahrzeugdach 1 mit angehobener Hinterkante 10 zum Be- und Entladen des Kofferraumes 4 dargestellt. Das Heckverriegelungsteil 8 wird hierfür entriegelt, so dass die Hinterkante 10 des Heckdeckels 5 keine feste Verbindung zur Fahrzeugkarosserie mehr besitzt und bei einer Betätigung der Mehrgelenkkinematik 6 über das Antriebselement 11 der Heckdeckel um eine virtuelle Drehachse im Bereich der Vorderkante 9 des Heckdeckels verschwenkt und die Hinterkante 10 hierdurch angehoben wird. Der Verriegelungslenker 16 befindet sich beim Anheben der Hinterkante 10 in Verriegelungsstellung, in welcher der Verriegelungslenker schwenkbar an die Fahrzeugkarosserie 7 gekoppelt ist.

Sowohl der Öffnungs- als auch der Schließvorgang des Heckdeckels 5 zum Be- und Entladen des Kofferraumes können durch Betätigung des Antriebselementes 11 durchgeführt werden. Das Ver- und Entriegeln des Heckverriegelungsteiles 8 wird zweckmäßig ebenfalls automatisch durchgeführt, kann gegebenenfalls aber auch von Hand ausgeführt werden.

In Fig. 4 ist die Mehrgelenkkinematik 6 bei angehobenem Heckdeckel 5 zum Be- und Entladen des Kofferraumes in vergrößerter Darstellung gezeigt. Der Hubkolben 12 des Antriebselementes 11 wird zum Anheben des Heckdeckels 5 gegenüber der Schließposition des Heckdeckels (Fig. 2) zurückgefahren, wodurch der Antriebslenker 14 im Gegenuhrzeigersinn um sein karosseriefestes Drehgelenk 15 verschwenkt wird und die gesamte Mehrgelenkkinematik 6 eine den Heckdeckel 5 mit seiner Hinterkante aufstellende Hubbewegung ausführt. Der Flansch 28 am Verriegelungslenker 16 ist fest mit der Lenkerverriegelungseinheit 27 verbunden, so dass der Heckdeckel um das nunmehr karosseriefeste Drehgelenk 23 an der Stirnseite des Verriegelungslenkers 16 verschwenkt wird.

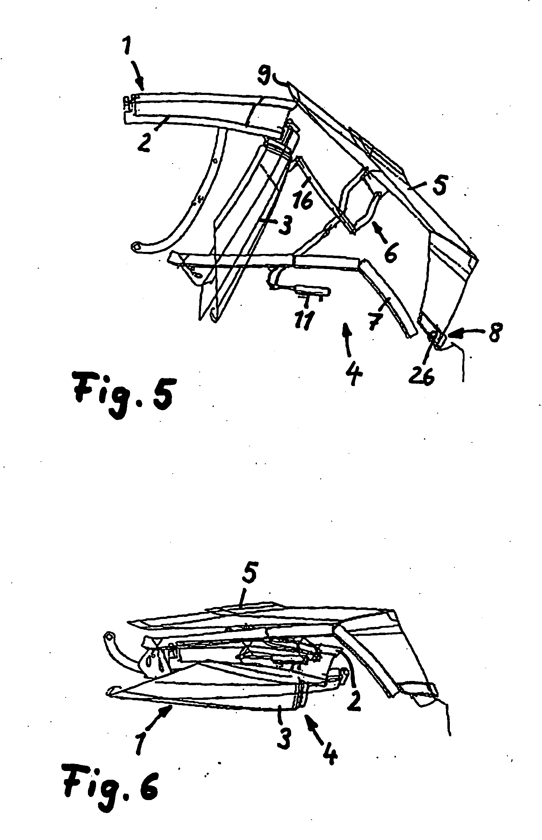

In Fig. 5 ist das Fahrzeugdach 1 in einer Zwischenposition zwischen Schließ- und Ablagestellung gezeigt, in der die beiden Dachteile 2 und 3 in Richtung Verdeckkasten im Kofferraum 4 bewegt werden. Um den Verdeckkasten zu öffnen, wird der Heckdeckel 5 um ein heckseitiges Drehgelenk 26 verschwenkt und hierdurch die Vorderkante 9 des Heckdeckels 5 angehoben. Das heckseitige Drehgelenk 26 ist Bestandteil des Verriegelungsteils 8, welches sich bei angehobener Vorderkante des Heckdeckels in Verriegelungsposition befindet, wodurch eine Verschwenkung des Heckdeckels um die Drehachse des heckseitigen Drehgelenks 26 gegenüber der Fahrzeugkarosserie ermöglicht wird. Der Verriegelungslenker 16 der Mehrgelenkkinematik 6 befindet sich in entriegelter Stellung und weist somit keine unmittelbare Bindung an die Fahrzeugkarosserie auf.

In Fig. 6 sind die Dachteile 2 und 3 des Fahrzeugdaches 1 im Verdeckkasten abgelegt, der Heckdeckel 5 ist wieder geschlossen. In geschlossener Position ist der Heckdeckel 5 vorteilhaft arretiert, was beispielsweise über auf das Antriebselement wirkende Arretierungsmechanismen bewerkstelligt werden kann. Bei Verriegelung beider Verschlüsse ist die Verriegelung des Antriebs nicht nötig.

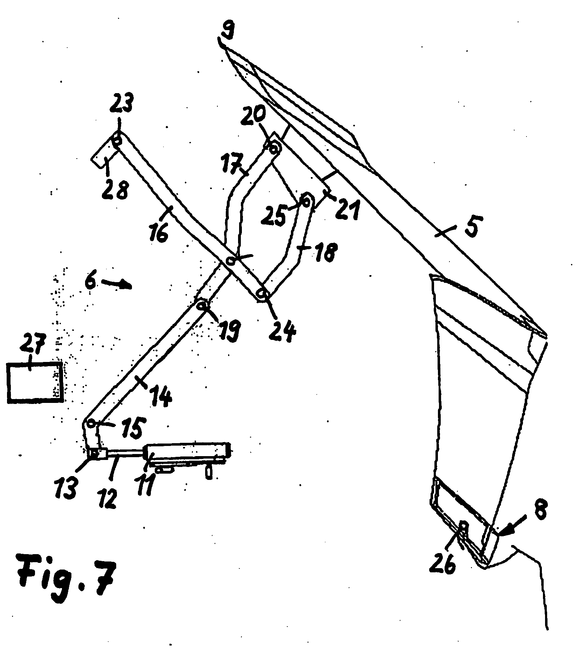

In Fig. 7 ist der Heckdeckel 5 einschließlich der Mehrgelenkkinematik 6 in vergrößerter Darstellung mit angehobener Vorderkante 9 gezeigt. Der Flansch 28 im Bereich des vorderen Abschnittes des Verriegelungslenkers 16 ist von der Lenkerverriegelungseinheit 27 entriegelt, so dass der vordere Teil des Verriegelungslenkers 16 angehoben werden kann..Die Mehrgelenkkinematik 6 besitzt hierdurch einen zusätzlichen Freiheitsgrad, der jedoch über die Bindung des Heckdeckels 5 über das heckseitige Drehgelenk 26 wieder eliminiert wird. Der Hubkolben 12 des Antriebselementes 11 wird zum Anheben der Vorderkante 9 des Heckdeckels 5 wieder in seine eingefahrene Position verstellt.

## Patentansprüche

1. Heckdeckel für ein Cabriolet-Fahrzeug, der über eine als Siebengelenkkinematik ausgebildete Mehrgelenkkinematik (6) an die Fahrzeugkarosserie (7) gekoppelt ist, mit einem die Siebengelenkkinematik (6) beaufschlagenden Antriebselement (11) zur Überführung des Heckdeckels (5) zwischen einer Schließposition und einer angehobenen Position, wobei zur Ablage des versenkbaren Fahrzeugdaches (1) die dem Fahrzeuginnenraum zugewandte Vorderkante (9) anzuheben und der Heckdeckel (5) um ein heckseitiges Drehgelenk (26) aufschwenkbar ist und zum Be- und Entladen des Kofferraumes (4) das heckseitige Drehgelenk (26) entriegelbar und die dem Fahrzeugheck benachbarte Hinterkante (10) des Heckdeckels (5) anzuheben ist, wobei die Siebengelenkkinematik insgesamt vier Lenker umfasst:
- einen an der Fahrzeugkarosserie (7) gelenkig gelagerten Antriebslenker (14),
- einen ersten, einenends gelenkig mit dem Antriebslenker (14) gekoppelten Hublenker (17), welcher anderenends gelenkig mit dem Heckdeckel (5) verbunden ist,
- einen Verriegelungslenker (16), der einenends gelenkig mit der Fahrzeugkarosserie (7), über ein mittleres Drehgelenk (22) mit dem ersten Hublenker (17) und anderenends gelenkig mit einem zweiten Hublenker (18) gekoppelt ist,
- den zweiten Hublenker (18), welcher auf der dem Verriegelungslenker (16) abgewandten Seite gelenkig mit dem Heckdeckel (5) verbunden ist,
**dadurch gekennzeichnet,**
**dass** der Verriegelungslenker (16) der Siebengelenkkinematik (6) zwischen einer Verriegelungsstellung und einer Entriegelungsstellung zu verstellen ist, wobei der Verriegelungslenker (16) in Verriegelungsstellung zum Anheben der Hinterkante des Heckdeckels (5) über ein Drehgelenk (23) schwenkbar an die Fahrzeugkarosserie (7) gekoppelt ist und in Entriegelungsstellung dieses Drehgelenk (23) entriegelt ist.

2. Heckdeckel nach Anspruch 1,
**dadurch gekennzeichnet,**
**dass** die Mehrgelenkkinematik (6) einen von dem Antriebselement (11) beaufschlagten, an der Fahrzeugkarosserie (7) gelenkig gelagerten Antriebslenker (14) umfasst.

3. Heckdeckel nach Anspruch 1 oder 2,
**dadurch gekennzeichnet,**
**dass** der Verriegelungslenker (16) über eine automatisch betätigbare Lenkerverriegelungseinheit (27) ver- und entriegelbar ist.

4. Heckdeckel nach einem der Ansprüche 1 bis 3,
**dadurch gekennzeichnet,**
**dass** das Antriebselement (11) als hydraulisches Stellglied ausgeführt ist.

5. Heckdeckel nach einem der Ansprüche 1 bis 4,
**gekennzeichnet durch**
eine einteilige, rahmenfreie Ausführung des Heckdeckels (5).

6. Heckdeckel nach einem der Ansprüche 1 bis 5,
**dadurch gekennzeichnet,**
**dass** die Stellrichtung des Antriebselements (11) für das Anheben der Vorderkante (9) und das Anheben der Hinterkante (10) des Heckdeckels (5) gleich ist.

7. Verwendung eines Heckdeckels nach einem der Ansprüche 1 bis 6 zum Verschließen eines heckseitigen Verdeckkastens, in welchem in einer Ablageposition mindestens zwei starre Dachteile (2, 3) eines Hardtop-Fahrzeugdachs abgelegt sind, das zwischen einer geschlossenen Position und der Ablageposition verstellbar ist.

## Claims

1. Rear opening hood for a convertible, which is coupled to the vehicle body (7) via a multi-joint kinematic arrangement (6) designed as a seven-joint kinematic arrangement, having a driving element (11), which acts upon the seven-joint kinematic arrangement (6), for transferring the rear opening hood (5) between a closed position and a raised position, the front edge (9) which faces the vehicle interior having to be raised and the rear opening hood (5) being pivotable about a rear rotary joint (26) to put away the retractable vehicle roof (1) and the rear rotary joint (26) being unlockable and the rear edge (10) of the rear opening hood (5), which edge is adjacent to the vehicle rear, having to be raised to load and unload the trunk (4), the seven-joint kinematic arrangement overall comprising four links:
- a driving link (14) mounted in an articulated manner on the vehicle body (7),
- a first lifting link (17), which is coupled at one end in an articulated manner to the driving link (14) and is connected at the other end in an articulated manner to the rear opening hood (5),
- a locking link (16), which is coupled at one end in an articulated manner to the vehicle body (7), is coupled by a central rotary joint (22) to the first lifting link (17) and is coupled at the other end in an articulated manner to a second lifting link (18),
- the second lifting link (18), which is connected on the side facing away from the locking link (16) in an articulated manner to the rear opening hood (5),
**characterized in that** the locking link (16) of the seven-joint kinematic arrangement (6) is to be displaced between a locking position and an unlocking position, the locking link (16), in the locking position, being coupled pivotably to the vehicle body (7) via a rotary joint (23) in order to raise the rear edge of the rear opening hood (5), and, in the unlocking position, this rotary joint (23) being unlocked.

2. Rear opening hood according to Claim 1, **characterized in that** the multi-joint kinematic arrangement (6) comprises a driving link (14) which is acted upon by the driving element (11) and is mounted in an articulated manner on the vehicle body (7).

3. Rear opening hood according to Claim 1 or 2, **characterized in that** the locking link (16) can be locked and unlocked via an automatically actuable link locking unit (27).

4. Rear opening hood according to one of Claims 1 to 3, **characterized in that** the driving element (11) is designed as a hydraulic adjuster.

5. Rear opening hood according to one of Claims 1 to 4, **characterized by** a single-part, frame-free design of the rear opening hood (5).

6. Rear opening hood according to one of Claims 1 to 5, **characterized in that** the adjusting direction of the driving element (11) for raising the front edge (9) and raising the rear edge (10) of the rear opening hood (5) is the same.

7. Use of a rear opening hood according to one of Claims 1 to 6 for closing a rear folding-top compartment, in which at least two rigid roof parts (2, 3) of a hard top vehicle roof are put away in a put-away position, which hard top vehicle roof can be displaced between a closed position and the put-away position.

## Revendications

1. Couvercle de coffre pour un véhicule cabriolet, qui est accouplé à la carrosserie de véhicule (7) par le biais d'une cinématique à articulations multiples (6) réalisée sous forme d'une cinématique à sept articulations, avec un élément d'entraînement (11) sollicitant la cinématique à sept articulations (6) pour transférer le couvercle de coffre (5) entre une position de fermeture et une position levée, l'arête avant (9) tournée vers l'habitacle du véhicule (9) devant être levée et le couvercle de coffre (5) pouvant être pivoté autour d'une articulation pivotante (26) du côté arrière pour déposer le toit abaissable du véhicule (1), et l'articulation pivotante (26) du côté arrière pouvant être déverrouillée pour le chargement et le déchargement de l'espace du coffre (4), et l'arête arrière (10) du couvercle arrière (5), adjacente à l'arrière du véhicule, devant être levée, la cinématique à sept articulations comprenant dans l'ensemble quatre bras de liaison :
- un bras d'entraînement (14) monté de manière articulée sur la carrosserie du véhicule (7),
- un premier bras de levage (17) accouplé à une extrémité de manière articulée au bras d'entraînement (14), qui est connecté à l'autre extrémité de manière articulée au couvercle de coffre (5),
- un bras de verrouillage (16) qui est accouplé à une extrémité de manière articulée à la carrosserie du véhicule (7), par le biais d'une articulation pivotante centrale (22) au premier bras de levage (17) et à l'autre extrémité de manière articulée à un deuxième bras de levage (18),
- le deuxième bras de levage (18), qui est connecté du côté opposé au bras de verrouillage (16) de manière articulée au couvercle de coffre (5),
**caractérisé en ce que**
le bras de verrouillage (16) de la cinématique à sept articulations (6) peut être déplacé entre une position de verrouillage et une position de déverrouillage, le bras de verrouillage (16) étant accouplé à la carrosserie du véhicule (7) de manière pivotante par le biais d'une articulation pivotante (23) dans la position de verrouillage pour soulever l'arête arrière du couvercle de coffre (5) et étant déverrouillé dans la position de déverrouillage de cette articulation pivotante (23).

2. Couvercle de coffre selon la revendication 1,
**caractérisé en ce que**
la cinématique à articulations multiples (6) comprend un bras d'entraînement (14) monté de manière articulée sur la carrosserie du véhicule (7) et sollicité par l'élément d'entraînement (11).

3. Couvercle de coffre selon la revendication 1 ou 2,
**caractérisé en ce que**
le bras de verrouillage (16) peut être verrouillé et déverrouillé par le biais d'une unité de verrouillage de bras de liaison (27) pouvant être actionnée automatiquement.

4. Couvercle de coffre selon l'une quelconque des revendications 1 à 3,
**caractérisé en ce que**
l'élément d'entraînement (11) est réalisé sous la forme d'un actionneur hydraulique.

5. Couvercle de coffre selon l'une quelconque des revendications 1 à 4,
**caractérisé par**
une réalisation d'une seule pièce et sans cadre du couvercle de coffre (5).

6. Couvercle de coffre selon l'une quelconque des revendications 1 à 5,
**caractérisé en ce que**
le sens de réglage de l'élément d'entraînement (11) pour le soulèvement de l'arête avant (9) et le soulèvement de l'arête arrière (10) du couvercle de coffre (5) est le même.

7. Utilisation d'un couvercle de coffre selon l'une quelconque des revendications 1 à 6 pour fermer un compartiment de coffre arrière, dans lequel, dans une position de rangement, au moins deux parties de toit rigides (2, 3) d'un toit de véhicule du type hardtop sont rangées, le toit de véhicule pouvant être déplacé entre une position fermée et la position de rangement.
